# EUROPÄISCHE PATENTANMELDUNG

(11) **EP 1 382 898 A2**
(43) Veröffentlichungstag der Anmeldung: **21.01.2004**
(21) Anmeldenummer: 03016196.2
(22) Anmeldetag: 17.07.2003
(51) Int. Cl.: F17C 7/00, F17C 9/00, F17C 13/02

(54) **Vorrichtung zur automatischen Entnahme einer Probe eines Mediums**

(30) Priorität: 17.07.2002 DE 10232455
(71) Anmelder: Endress + Hauser Wetzer GmbH + Co. KG, D-87484 Nesselwang (DE)
(72) Erfinder: Steidle, Wolfgang, 87439 Kempten (DE); Zeller, Robert, 86983 Lechbruck (DE)
(74) Vertreter: Andres, Angelika

(57) **Zusammenfassung**

Die Erfindung bezieht sich auf eine Vorrichtung zur automatischen Entnahme einer Probe eines Mediums (2) aus einem unter Druck stehenden Behältnis (1) mit einer Öffnungs-/Schließvorrichtung (8), die in eine Öffnungsstellung und in eine Schließstellung schaltbar ist, wobei in der Öffnungsstellung die Probe über eine Öffnung (3) aus dem Behältnis (1) entnommen und über eine Zulauföffnung (7) in eine Probenkammer (11) eingefüllt wird, und wobei in der Schließstellung die Öffnung (3) des Behältnisses (1) verschlossen ist, so daß die in der Probenkammer (11) enthaltene Probe von dem in dem Behältnis (1) enthaltenen Medium (2) separiert ist und/oder in einen Probenbehälter (27) eingefüllt wird. Die Probenkammer (11) weist eine Stellvorrichtung (40; 17, 18) auf, über die das Volumen der Probenkammer (11) einstellbar ist.

## Beschreibung

Die Erfindung bezieht sich auf eine Vorrichtung zur automatischen Entnahme einer Probe eines Mediums aus einem unter Druck stehenden Behältnis mit einer Öffnungs-/Schließvorrichtung, die in eine Öffnungsstellung und in eine Schließstellung schaltbar ist, wobei in der Öffnungsstellung die Probe über eine Öffnung aus dem Behältnis entnommen und über eine Zulauföffnung in eine Probenkammer eingefüllt wird, und wobei in der Schließstellung die Öffnung des Behältnisses verschlossen ist, so daß die in der Probenkammer enthaltene Probe von dem in dem Behältnis enthaltenen Medium separiert ist und/oder in einen Probenbehälter eingefüllt wird.

Eine entsprechende Vorrichtung zur sog. Inline-Probennahme ist bereits aus der DE 198 41 782 A1 bekannt geworden. Die Öffnungs-/Schließvorrichtung ist hier durch eine Keramikscheibe mit einer exzentrischen Bohrung realisiert, die zwischen einer feststehenden Keramikscheibe mit einer Zulaufbohrung und einer feststehenden Keramikplatte mit einer Ablaufbohrung angeordnet ist. Die Keramikscheibe mit der exzentrischen Bohrung rotiert um ihre zentrische Achse. Bei jeder Umdrehung wird eine dem Volumen der Bohrung der mittleren Platte entsprechende Probenmenge aus dem Probenzulauf 'herausgeschnitten' und über den Probenablauf in einen Probenbehälter eingefüllt.
Nachteil dieser bekannten Lösung ist, daß die entnommene Probenmenge durch das Volumen der exzentrischen Bohrung der mittleren Keramikplatte vorgegeben ist. Mit dieser Ausgestaltung lassen sich daher keine beliebigen, variablen Probenmengen aus dem unter Druck stehenden Behältnis entnehmen.

Der Erfindung liegt die Aufgabe zugrunde, eine Vorrichtung vorzuschlagen, mit der beliebige Probenmengen aus einem unter Druck stehenden Behältnis entommen werden können.

Die Aufgabe wird dadurch gelöst, daß die Probenkammer eine Stellvorrichtung aufweist, über die das Volumen der Probenkammer einstellbar ist. Eine alternative Lösung der Aufgabe sieht vor, daß der Probenkammer eine Stellvorrichtung zugeordnet ist, über die eine einstellbare Probenmenge in die Probenkammer einfüllbar ist.

Eine weitere Aufgabe der Erfindung ist es, eine einfache, zuverlässige Vorrichtung vorzuschlagen, mit der eine Probe aus einem unter Druck stehenden Behältnis entnommen werden kann. Diese Aufgabe wird dadurch gelöst, daß die Probenkammer und damit die aus dem unter Druck stehenden Behältnis entnommene Probenmenge durch den Raum zwischen zwei Kugelventilen oder zwei anderweitigen Ventilen definiert ist. Der Vorteil von Kugelventilen ist nachfolgend noch im Detail erläutert. Auch im Fall dieser erfindungsgemäßen Lösung schlägt eine Weiterbildung vor, das Probenvolumen durch einen integrierten Einstellmechanismus oder durch einen Austausch der Probenkammer auf einen gewünschten Wert einzustellen.

Gemäß einer bevorzugten Ausgestaltung der erfindungsgemäßen Vorrichtung ist zusätzlich zu dem Öffnungs-/Schließmechanismus ein Schließ-/Öffnungsmechanismus vorgesehen, der in eine Schließstellung und in eine Öffnungsstellung schaltbar ist, wobei in der Schließstellung eine Auslaßöffnung der Probenkammer verschlossen ist und wobei in der Öffnungsstellung die Auslaßöffnung der Probenkammer frei ist und die in der Probenkammer enthaltene Probe in den Probenbehälter eingefüllt wird. Bei den beiden Vorrichtungen - der Öffnungs-/Schließvorrichtung und der Schließ-/Öffnungsvorrichtung - handelt es sich vorzugsweise um Kugelventile. Bei Verwendung von Kugelventilen zeigen sich alle jene Vorteile, die in der Figurenbeschreibung im Detail aufgelistet sind. Kugelventile zeichnen sich darüber hinaus dadurch aus, daß sie einen sehr geringen Verschleiß haben. Eine entsprechende Ausgestaltung der Erfindung ist daher sehr wartungsarm.

Gemäß einer vorteilhaften Weiterbildung der erfindungsgemäßen Vorrichtung werden die Antriebsachsen der beiden Kugelventile über eine Zwangssteuerung zumindest näherungsweise synchron in die vorgegebenen Stellungen gedreht. Im einfachsten Fall besteht die Zwangssteuerung aus einer Hebelkonstruktion, die eine starre Verbindung zwischen den beiden Antriebsachsen der Kugelventile herstellt. Die Zwangssteuerung ist sowohl über eine pneumatische oder über eine elektrische/ elektronische Steuerung betätigbar. Im zweiten Fall ist den Antriebsachsen der Kugelventile zumindest ein Motor zugeordnet. Der Motor bzw. die Motoren dreht/drehen über eine Regel-/ Steuereinheit die Kugelventile zumindest näherungsseise synchron in die vorgegebenen Stellungen.

Eine vorteilhafte Weiterbildung der erfindungsgemäßen Vorrichtung schlägt vor, daß im oberen Bereich der Probenkammer eine Öffnung vorgesehen ist, über die die Probenkammer von außen zugänglich ist. Diese Öffnung kann einerseits zu Entlüftungszwecken genutzt werden; andererseits kann sie zur Reinigung der Probenkammer nach der Entnahme einer Probe dienen. Hierzu ist die Öffnung in einer entsprechenden Stellung mit einer Druckleitung oder einer Spülleitung verbunden. Die Steuerung des Entlüftungsprozesses bzw. des Reinigungs-/Spülprozesses kann über die Regel-/Steuereinheit erfolgen.

Die Erfindung wird anhand der nachfolgenden Zeichnungen näher erläutert. Es zeigt:
Fig. 1: einen Längsschnitt durch eine erste Ausführungsform der erfindungsgemäßen Vorrichtung,
Fig. 2a: einen Längsschnitt der in Fig. 1 dargestellten Ausführungsform in der Stellung 'Probenkammer befüllen',
Fig. 2b: einen Längsschnitt der in Fig. 1 dargestellten Ausführungsform in der Stellung 'Ein- und Auslaßöffnung der Probenkammer geschlossen',
Fig. 2c: einen Längsschnitt der in Fig. 1 dargestellten Ausführungsform in der Stellung 'Probenkammer entleeren',
Fig. 3: einen Längsschnitt durch eine zweite Ausführungsform der erfindungsgemäßen Vorrichtung und
Fig. 4: einen Längsschnitt durch eine dritte Ausführungsform der erfindungsgemäßen Vorrichtung.

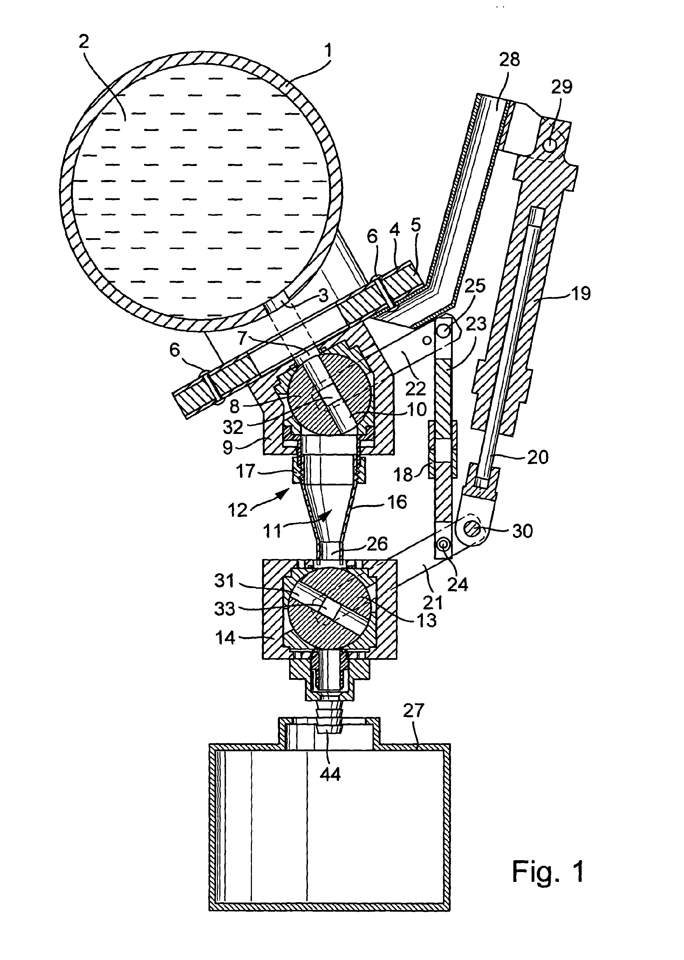

Fig. 1 zeigt einen Längsschnitt durch eine erste Ausführungsform der erfindungsgemäßen Vorrichtung zur automatischen Entnahme einer Probe eines Mediums 2 aus einem unter Druck stehenden Behältnis 1. Im gezeigten Fall handelt es sich bei dem Behältnis 1 um eine Rohrleitung. Die Entnahmevorrichtung ist im gezeigten Fall über die Flansche 4, 5 an die Rohrleitung angeschlossen. Selbstverständlich ist es auch möglich, die Entnahmevorrichtung in die Rohrleitung zuzuschweißen. Der Vorteil dieser Lösung liegt darin, daß kein Totraum auftritt.

Im gezeigten Ausführungsbeispiel sind die wesentlichen Komponenten der Entnahmevorrichtung der Öffnungs-/Schließmechanismus - hierbei handelt es sich um das Kugelventil 8 -, die Dosiereinheit 12 und den Schließ-/Öffnungsmechanismus, bei dem es sich wiederum um ein Kugelventil 13 handelt. Die Kugelventile 8, 13 sind in den Ventilgehäusen 9, 14 gelagert. Es versteht sich von selbst, daß in Verbindung mit der vorliegenden Erfindung als Einlaßventil 8 bzw. als Auslaßventil 13 im Prinzip jedes anderweitige, steuerbare Ventil eingesetzt werden kann.

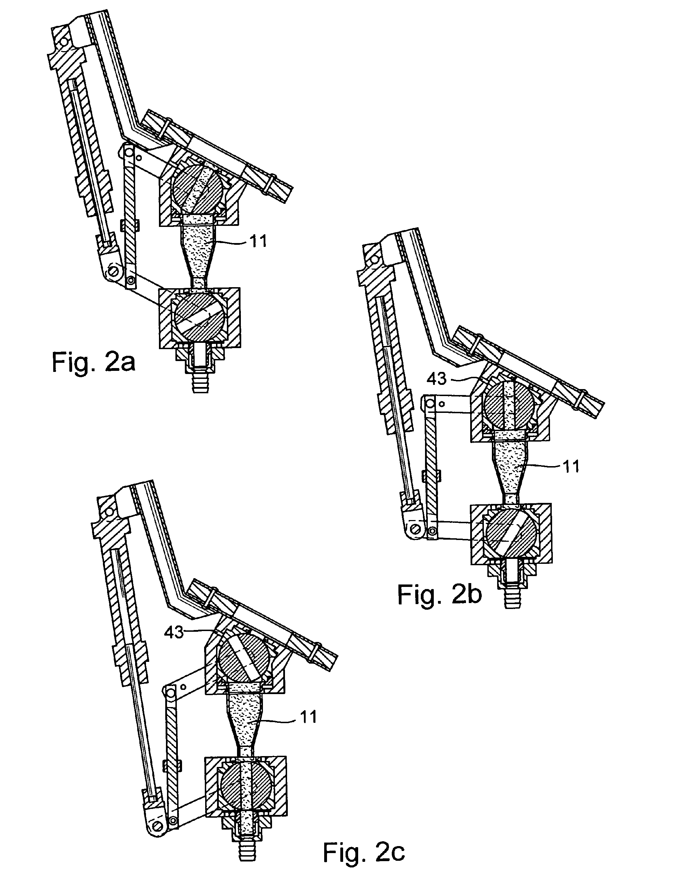

Die Zwangssteuerung der beiden Ventile 8, 13 erfolgt über eine mechanische Hebelkonstruktion. Die Antriebsachsen 32, 33 der Kugelventile 8, 13 sind über die Hebel 21, 22 und die starren Verbindungen 24, 25 mit dem Hebel 23 verbunden. Über die Hebelkonstruktion wird ein eingestellter Winkel zwischen den Längsachsen der Durchbohrungen 10, 31 der Kugelventile 8, 13 unabhängig von der Hubbewegung des Antriebs 19, 20 beibehalten. Die relative Winkelstellung der Längsachsen der Durchbohrungen 10, 31 der Kugelventile 8, 13 ist so gewählt, daß die in den Figuren Fig. 2a, Fig. 2b und Fig. 2c gezeigten Ventilstellungen realisiert werden können. Auf die Figuren Fig. 2a, Fig. 2b und Fig. 2c wird an einer nachfolgenden Stelle noch näher eingegangen.

Im gezeigten Ausführungsbeispiel besteht der Antrieb für die Kugelventile 8, 13 aus dem Betätigungszylinder 19 und dem Kolben 20. Das Ein- und Ausfahren des Kolbens 20 erfolgt pneumatisch oder elektrisch und wird von einer in der Fig. 1 nicht gesonderten Regel-/Steuereinheit initiiert. in seinem oberen Bereich ist der Betätigungszylinder 19 über den Trägerarm 28 und die Verbindung 29 starr an dem Ventilgehäuse 9 fixiert. Im unteren Bereich ist der Betätigungszylinder 19 über die starre Verbindung 30 mit dem Hebel 21 verbunden. Durch diese Konstruktion wird die translatorische Bewegung des Kolbens 20 in eine simultane Winkeldrehung der beiden Kugelventile 8, 13 umgesetzt.

Erfindungsgemäß ist das Volumen der Probenkammer 11 einstellbar. Im gezeigten Fall erfolgt die Einstellung über ein längenverstellbares Element 17, das Teil des Adapters 16 ist. Der Adapter 16 ist zwischen den beiden Kugelgehäusen 9, 14 angeordnet. Die Verstellung erfolgt in einfacher Weise über eine oder mehrere Umdrehungen des längenverstellbaren Elements 17. Bei dem längenverstellbaren Element 17 handelt es sich beispielsweise um eine Klemmringverschraubung. Damit eine eingestellte Winkellage zwischen den Durchbohrungen 10, 31 der Kugelventile 8, 13 bei Verstellung des Probenkammer 11 beibehalten wird, ist auch der Hebel 23 längenverstellbar ausgestaltet. Die Verlängerung bzw. die Verkürzung des Hebels 23 erfolgt über ein Drehen des längenverstellbaren Elements 18. Die durch das eingestellte Volumen der Probenkammer 11 zu dosierende Probe des Mediums 2 läuft anschließend über den Einfüllstutzen 44 in den Aufnahmebehälter 27 ab. Es versteht sich von selbst, daß die Einstellung des Probenvolumens auch auf alternative Art und Weise erfolgen kann. So ist es beispielsweise möglich, den Adapter bzw. das Zwischenstück 16 und den Hebel 23 durch entsprechend kleinere oder größere Varianten auszutauschen.

In den Figuren Fig. 2a, Fig. 2b, Fig. 2c sind die für die Entnahme einer Probe des Mediums 2 aus der Rohrleitung 1 notwendigen Schritte visualisiert. In der Öffnungsstellung (Fig. 2a) weist die Zulauföffnung 7 bzw. die Durchbohrung 10 des Kugelventils 8 in Richtung der Öffnung 3 der Rohrleitung 1. Das Medium 2 füllt die Probenkammer 11. Die Auslaßöffnung 26 der Probenkammer 11 ist durch das Kugelventil 13 verschlossen ist. Das der Probe des Mediums 2 in der Probenkammer 11 maximal zur Verfügung stehende Volumen ist übrigens in den Fig. 2a, Fig. 2b und Fig. 2c grau unterlegt.

Bei der in Fig. 2b gezeigten Stellung sind sowohl die Zulauföffnung 7 als auch die Auslaßöffnung 26 der Probenkammer 11 durch die Kugelventile 8, 13 verschlossen. Bei der in Fig. 2c visualisierten Stellung der Kugelventile 8, 13 wird die Probe des Mediums 2 aus der Probenkammer 11 in den Aufnahmebehälter 27 abdosiert. Hierbei verschließt das Kugelventil 8 die Öffnung 3 zur Rohrleitung 1. Im dargestellten Fall bewirkt ein maximaler Hub des Kolbens 20 übrigens eine synchrone Drehung der beiden Kugelventile 8, 13 um einen Winkel von 60°.

Nach dem Ablassen der Probe des Mediums 2 in den Aufnahmebehälter 27 kann die Probenkammer 11 z.B. zwecks Reinigung mit Druckluft ausgeblasen oder mit einer Reinigungsflüssigkeit gereinigt werden. Die Reinigung kann automatisch erfolgen, indem die Druckluft oder das Reinigungsmittel über den Druck- oder Spülanschluß 43 in die Probenkammer 11 eingeleitet werden. Alternativ oder zusätzlich kann in dieser Stellung an dem Ventilgehäuse 14 eine Entlüftungsbohrung vorgesehen sein, über die in der Probenkammer 11 eingeschlossene Luft abgelassen werden kann.

Der Einsatz von Kugelventilen 8, 13 in Verbindung mit der erfindungsgemäßen Entnahmevorrichtung bringt die folgenden Vorteile:
- Das Medium 2 passiert auf dem Weg zum Aufnahmebehälter 27 keinerlei O-Ring-Abdichtungen. Dichtungsprobleme treten daher nicht auf.
- Die Ventilkugeln rotieren lediglich um einen eingestellten oder vorgegebenen Drehwinkel zwischen den beiden Stellungen 'Probe aufnehmen' und 'Probe ablassen'. Ein Drehwinkel von 60° ist in diesem Zusammenhang völlig ausreichend.
- Die Ventilgehäuse 9, 14 benötigen - im Gegensatz zu allen anderen Kugelhahnlösungen - infolge der speziellen Dichtungsgeometrie keine zusätzliche Abdichtung z. B. an der Antriebsachse und an der Gehäusetrennung.
- Infolge der Dichtungsgeometrie findet - im Gegensatz zu allen anderen Kugelhahnlösungen - keine Probenverschleppung oder Probenvermischung statt.
- Die Durchbohrungen 10, 31 der Kugelventile 8, 13 passieren während der Probennahme keine Stoßkanten der Dichtschalen der Ventilgehäuse 9, 14 oder andere Spalte, in denen sich Medium 2 ablagern kann.
- Die Probenkammer 11 läßt sich problemlos evakuieren. Sinnvoll ist dies insbesondere beim Abfüllen von pastösen Medien oder wenn sichergestellt sein soll, daß keine Luft in die Rohrleitung 1 eingebracht werden soll.
- Wie bereits erwähnt, kann der Probenraum 11 zu Reinigungszwecken mit Druckluft ausgeblasen oder mit einer Reinigungsflüssigkeit gesäubert werden. Über die Regel-/Steuereinheit lassen sich diese Prozesse in bekannter Weise automatisieren.

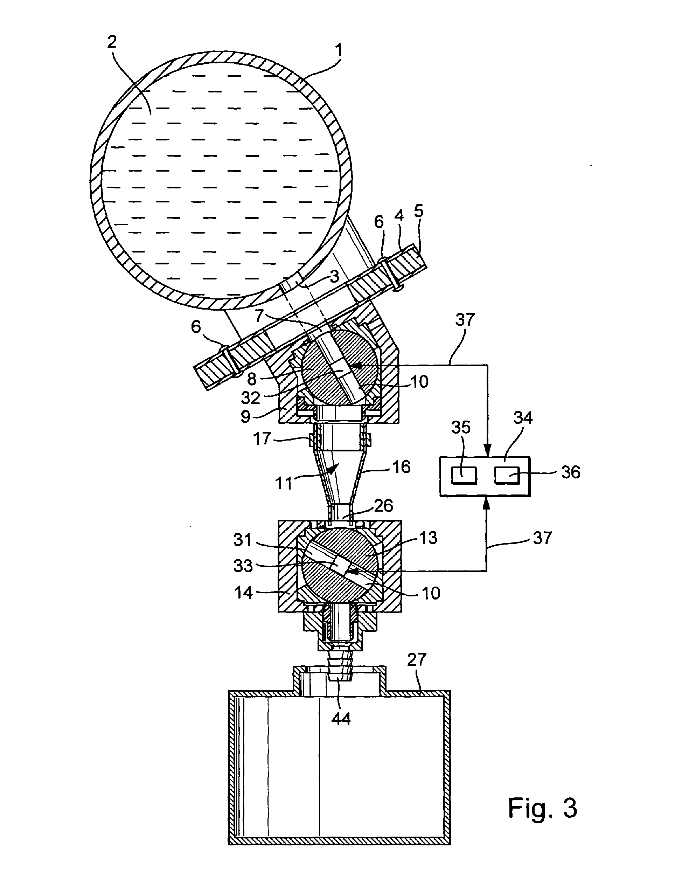

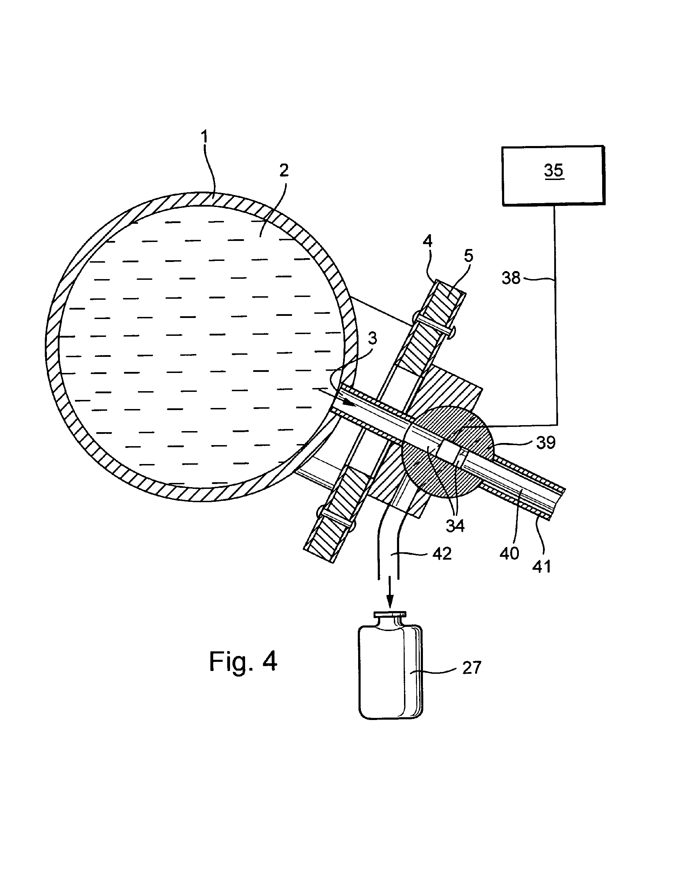

Fig. 3 zeigt einen Längsschnitt durch eine zweite Ausführungsform der erfindungsgemäßen Vorrichtung. Diese Ausführungsform unterscheidet sich von der Entnahmevorrichtung, die anhand der vorhergehenden Figuren erläutert wurde, lediglich hinsichtlich des Antriebs für die Steuerung der Kugelventile 8, 13. Während der Antrieb in Fig. 1 über einen Betätigungszylinder 19 mit Kolben 20 realisiert ist, erfolgt bei der in Fig. 3 gezeigten Ausführungsform die synchrone Verdrehung der Ventile 8, 13 in die gewünschten Stellungen motorgesteuert. Die Motoren (in der. Fig. 4 sind diese nicht gesondert dargestellt) treiben die Antriebsachsen 32, 33 der Kugelventile 8, 13 an. Die Regel-/Steuereinheit 35 steuert sukzessive über einen Mikroprozessor 36 die für die Probennahme, die Entlüftung oder Reinigung erforderlichen Stellungen der Kugelventile 8, 13 an.

In Fig. 4 ist ein Längsschnitt durch eine dritte Ausführungsform der erfindungsgemäßen Vorrichtung zusehen. Diese zeichnet sich durch einen relativ einfachen Aufbau aus, da lediglich ein Kugelventil 39 erforderlich. Dieses Kugelventil 39 erfüllt sowohl die Funktion des Einlaßventils (durchgezogene Linien) als auch die Funktion des Auslaßventils (gestrichelte Linie). In die Durchbohrung des Kugelventils 39 reicht in der ersten Stellung 'Probenkammer befüllen' ein in einem Rohr 41 geführter Kolben 40. Durch die Stellung des Kolbens 40 in der Durchbohrung 34 bzw. an deren Rand läßt sich das Volumen der Probenkammer 11 einstellen. Das gewünschte Probenvolumen kann beispielsweise über die Regel-/Steuereinheit 35 eingegeben werden. Nachfolgend bringt die Regel-/Steuereinheit 35 den Kolben 40 automatisch in die entsprechende Stellung.

In der zweiten Stellung 'Probenkammer entleeren' wird das Kugelventil 39 so gedreht, daß seine Zulauföffnung mit dem Einfüllstutzen 42 korrespondiert und nachfolgend als Ablauföffnung fungiert. Die Probe wird in den Aufnahmebehälter 27 abdosiert. Gleichzeitig mit der Verdrehung des Kugelventils 39 in die zweite Stellung wird der Kolben 40 - falls nötig - aus der Durchbohrung 34 herausbewegt.

### Bezugszeichenliste

- 1: Behältnis
- 2: Medium
- 3: Öffnung
- 4: Flansch
- 5: Flansch
- 6: Verbindungselement
- 7: Zulauföffnung
- 8: Öffnungs-/ Schließmechanismus / Kugelventil
- 9: Ventilgehäuse
- 10: Durchbohrung
- 11: Probenkammer
- 12: Dosierbehälter
- 13: Schließ- / Öffnungsmechanismus / Kugelventil
- 14: Ventilgehäuse
- 15: Durchbohrung
- 16: Zwischenstück / Adapter
- 17: Längenverstellbares Element
- 18: Längenverstellbares Element
- 19: Betätigungszylinder
- 20: Kolben
- 21: Hebel
- 22: Hebel
- 23: Hebel
- 24: Starre Verbindung
- 25: Starre Verbindung
- 26: Auslaßöffnung
- 27: Probenbehälter
- 28: Trägerarm
- 29: Starre Verbindung
- 30: Starre Verbindung
- 31: Durchbohrung
- 32: Antriebsachse
- 33: Antriebsachse
- 34: Bohrung
- 35: Regel-/Steuereinheit
- 36: Mikroprozessor
- 37: Speicher
- 38: Verbindungsleitung
- 39: Einlaß-/Auslaßventil (Kugelventil)
- 40: Kolben
- 41: Rohr
- 42: Einfüllstutzen
- 43: Spül- oder Reinigungsöffnung
- 44: Einfüllstutzen

## Patentansprüche

1. Vorrichtung zur automatischen Entnahme einer Probe eines Mediums (2) aus einem unter Druck stehenden Behältnis (1) mit einer Öffnungs-/Schließvorrichtung (8), die in eine Öffnungsstellung und in eine Schließstellung schaltbar ist, wobei in der Öffnungsstellung die Probe über eine Öffnung (3) aus dem Behältnis (1) entnommen und über eine Zulauföffnung (7) in eine Probenkammer (11) eingefüllt wird, und wobei in der Schließstellung die Öffnung (3) des Behältnisses (1) verschlossen ist, so daß die in der Probenkammer (11) enthaltene Probe von dem in dem Behältnis (1) enthaltenen Medium (2) separiert ist und/oder in einen Probenbehälter (27) eingefüllt wird,
**dadurch gekennzeichnet,**
**daß** die Probenkammer (11) eine Stellvorrichtung (40; 17, 18) aufweist, über die das Volumen der Probenkammer (11) einstellbar ist, oder
**daß** der Probenkammer (11) eine Stellvorrichtung (40; 17, 18) zugeordnet ist, über die eine einstellbare Probenmenge in die Probenkammer (11) einfüllbar ist.

2. Vorrichtung nach Anspruch 1,
**dadurch gekennzeichnet,**
**daß** ein Schließ-/Öffnungsmechanismus (13) vorgesehen ist, der in eine Schließstellung und in eine Öffnungsstellung schaltbar ist, wobei in der Schließstellung eine Auslaßöffnung (26) der Probenkammer (11)
verschlossen ist und wobei in der Öffnungsstellung die Auslaßöffnung (26) der Probenkammer (11) frei ist und die in der Probenkammer (11) enthaltene Probe in den Probenbehälter eingefüllt wird.

3. Vorrichtung nach Anspruch 1,
**dadurch gekennzeichnet,**
**daß** es sich bei der Öffnungs-/Schließvorrichtung um ein Kugelventil (8) handelt.

4. Vorrichtung nach Anspruch 2,
**dadurch gekennzeichnet,**
**daß** es sich bei der Schließ-/Öffnungsvorrichtung um ein Kugelventil (13) handelt.

5. Vorrichtung nach Anspruch 3 und 4,
**dadurch gekennzeichnet,**
**daß** die Antriebsachsen (32, 33) der beiden Kugelventile (8, 13) über eine Zwangssteuerung zumindest näherungsweise synchron in die vorgegebenen Stellungen gedreht werden.

6. Vorrichtung nach Anspruch 5,
**dadurch gekennzeichnet,**
**daß** es sich bei der Zwangssteuerung um eine Hebelkonstruktion handelt, die eine starre Verbindung zwischen den beiden Antriebsachsen (32, 33) der Kugelventile (8, 13) herstellt.

7. Vorrichtung nach Anspruch 5 oder 6,
**dadurch gekennzeichnet,**
**daß** die Zwangssteuerung über eine pneumatische oder elektrische/ elektronische Steuerung betätigbar ist.

8. Vorrichtung nach Anspruch 5,
**dadurch gekennzeichnet,**
**daß** den Antriebsachen (32, 33) der Kugelventile (8, 13) zumindest ein Motor zugeordnet ist und daß der Motor bzw. die Motoren über eine Regel-/ Steuereinheit die Kugelventile (8, 13) zumindest näherungsseise synchron in die vorgegebenen Stellungen dreht.

9. Vorrichtung nach Anspruch 1,
**dadurch gekennzeichnet,**
**daß** im oberen Bereich der Probenkammer (11) eine Öffnung (43) vorgesehen ist, über die die Probenkammer (11) von außen zugänglich ist.
